# EUROPÄISCHE PATENTSCHRIFT

(11) **EP 1 622 076 B1**
(45) Veröffentlichungstag und Bekanntmachung des Hinweises auf die Patenterteilung: **02.07.2008**
(21) Anmeldenummer: 05022226.4
(22) Anmeldetag: 31.08.2004
(51) Int. Cl.: G06Q 10/00

(54) **Verfahren und Anordnung zur Lieferung einer Sendung**
Method and system for delivering a consignment
Procédé et agencement destiné à la livraison d'un envoi

(30) Priorität: 02.09.2003 DE 10340904
(43) Veröffentlichungstag der Anmeldung: 01.02.2006
(62) Teilanmeldung aus: 04764647.6
(73) Patentinhaber: Deutsche Post AG, 53113 Bonn (DE)
(72) Erfinder: Mayer, Boris, 53129 Bonn (DE); Alario, Flavio, 53111 Bonn (DE)
(74) Vertreter: Jostarndt, Hans-Dieter

(56) Entgegenhaltungen:
- DE-A- 10 218 178
- DE-A- 19 939 211

## Beschreibung

Die Erfindung betrifft ein Verfahren zur Lieferung einer Sendung, bei dem die Sendung zu einer Zustelladresse transportiert wird, an der ein Benachrichtigungsmittel deponiert wird, falls festgestellt wird, dass keine Übergabe der Sendung an einen berechtigten Empfänger möglich ist. Dabei wird das Benachrichtigungsmittel wenigstens mit Daten zur Kennzeichnung der Paketfachanlage, Daten des Empfängers und einem Identifikationsmittel versehen. Daraufhin erfolgt eine Deponierung der Sendung in einem Fach einer elektronischen Paketfachanlage, wobei wenigstens das dem Empfänger der Sendung zugeordnete Identifikationsmittel erfasst und zu dem betreffenden Fach gespeichert wird. Ferner erfolgt eine Abholung der Sendung an der Paketfachanlage durch einen Abholer, wobei wenigstens das dem Empfänger der Sendung zugeordnete Identifikationsmittel erfasst wird. Es erfolgt ein Vergleich des dem Empfänger der Sendung zugeordneten Identifikationsmittels mit den für belegte Fächer gespeicherten Identifikationsmitteln, und es erfolgt die Ausgabe der deponierten Sendung aus einem Fach, falls das Ergebnis des Vergleiches ergibt, dass das dem Empfänger zugeordnete Identifikationsmittel mit einem zu dem betreffenden Fach gespeicherten Identifikationsmittel übereinstimmt.

Die Erfindung betrifft ferner eine Anordnung zur Durchführung des Verfahrens.

Bei der Lieferung von Sendungen zu einer Zustelladresse eines Empfängers ist es bekannt, dass der Zusteller an der Zustelladresse eine Benachrichtigung hinterlässt, falls er die Sendung keinem berechtigten Empfänger übergeben konnte. Bei solchen Sendungen handelt es sich beispielsweise um Päckchen oder Pakete, welche aufgrund ihrer Größe nicht in herkömmlichen Briefkästen deponiert werden können. Ferner kann es sich um nachweispflichtige Sendungen wie Einschreiben oder Nachnahmesendungen handeln, für welche bei Empfang ein Geldbetrag zu entrichten ist.

Typischerweise handelt es sich bei einer Benachrichtigung um eine Benachrichtigungskarte, auf welcher der Empfänger und die Postfiliale vermerkt sind, bei welcher die Sendung zu einem späteren Zeitpunkt von dem Empfänger abgeholt werden kann. In den meisten Fällen ist die Sendung jedoch erst am nächsten Werktag abholbereit, und der Zeitraum der möglichen Abholung richtet sich nach den Öffnungszeiten der jeweiligen Filiale. Dies ist für den Empfänger sehr nachteilig, da die Öffnungszeiten der Filiale eine bedeutende Einschränkung seiner Flexibilität bedeuten. Beispielsweise ist es für berufstätige Empfänger schwierig, eine Filiale zu deren Öffnungszeiten aufzusuchen, da sich diese typischerweise mit seinen eigenen Arbeitszeiten überschneiden.

Ferner können Filialen zu bestimmten Zeiten überfüllt sein, was für den Empfänger einen weiteren Zeitverlust bedeutet und für ihn nicht sehr komfortabel ist. Er kann seine Sendung somit oftmals nicht zum nächstmöglichen Zeitpunkt in Empfang nehmen, sondern der Zeitpunkt kann sich aufgrund verschiedener negativer Faktoren beträchtlich hinauszögern.

Für den Fall, dass eine Sendung an einer Zustelladresse keinem berechtigten Empfänger übergeben werden kann, besteht demnach ein Bedarf nach Verfahren, bei denen die genannten Nachteile nicht auftreten. Bekannte Verfahren verwenden daher beispielsweise spezielle Fächer an der Zustelladresse, zu denen ein Zusteller Zugriff hat. So können größere Sendungen, für deren Deponierung ein entsprechend großes Fach erforderlich ist, vom Zusteller eingestellt werden. Diese Lösung erfordert jedoch einen hohen Aufwand für die Empfänger, da jeder potenzielle Empfänger einer Sendung ein großes Fach an seiner Zustelladresse anbringen muss. Dies ist baulich schwer zu realisieren, da es zuviel Platz bedarf. Außerdem lassen sich dadurch keine nachweisbedürftigen Sendungen und/oder Nachnahmesendungen deponieren.

Ferner ist es bekannt, Systeme mit elektronischen Fachanlagen so zu betreiben, dass Benutzer unter Angabe verschiedener Daten im System registriert werden und so die Fachanlagen benutzen können. Zu den Registrierungsdaten zählen beispielsweise Name, Adresse und Kontoverbindung, aber auch Mobilfunknummern oder E-mail-Adressen. Mobilfunknummern und E-mail-Adresse werden insbesondere dazu verwendet, Benutzern des Systems Nachrichten zukommen zu lassen.

Bei einer solchen Fachanlage kann es sich um eine Paketfachanlage handeln, die zur Deponierung von Sendungen wie Paketen Fächer verschiedener Größe aufweist. Die Paketfachanlage steht typischerweise in Verbindung mit einer zentralen Datenverwaltungseinheit wie einem Server, in welcher Daten über die Vorgänge an verschiedenen Paketfachanlagen verwaltet werden.

Ist ein Empfänger registrierter Nutzer eines solchen Systems, kann eine Sendung in einer Paketfachanlage deponiert werden, falls der Empfänger an der Zustelladresse nicht anzutreffen ist. Nach der Deponierung kann dem Empfänger beispielsweise per SMS oder E-Mail davon unterrichtet werden, dass eine Sendung für ihn deponiert wurde. Mit der Nachricht kann außerdem ein sendungsbezogener Identifikationscode übermittelt werden, welcher den Empfänger dazu berechtigt, seine Sendung abzuholen. Zur Identifikation kann bei der Registrierung ferner ein personenbezogenes Identifikationsmittel vergeben werden, mit welchen sich der Empfänger an der Paketfachanlage identifizieren kann. Dabei kann es sich beispielsweise um eine Karte oder einen weiteren Code handeln.

Aufgrund der Registrierungsdaten des Empfängers als Nutzer des Systems ist es also möglich, ihm Benachrichtigungen mit sendungsbezogenen Codes zu übermitteln und ihn bei der Abholung einer Sendung an der Paketfachanlage zu identifizieren. Dies ist bei nicht-registrierten Empfängern nicht der Fall, so dass derartige Verfahren nicht eingesetzt werden können. Da jedoch eine vollständige Registrierung aller potenzieller Empfänger schwer zu realisieren ist und gegebenenfalls nicht alle Empfänger über eine Möglichkeit zur SMS- oder E-Mailbenachrichtigung verfügen, besteht weiterhin ein Bedarf nach einem neuen Verfahren zur Lieferung von Sendungen. Da der Einsatz von Paketfachanlagen auf registrierte Nutzer beschränkt ist, ist ferner die Auslastung eingesetzter Paketfachanlagen nur begrenzt.

Die deutsche Offenlegungsschrift DE 199 39 211 A1 beschreibt beispielsweise ein Verfahren zum automatisierten Ausgeben von Stückgut wie Paketen oder Päckchen aus einem Lager. Das Verfahren sieht die Überbringung einer Benachrichtigungskarte an einen Empfänger vor, wenn dieser an einer Empfängeradresse nicht anzutreffen ist. Dabei ist die Benachrichtigungskarte mit einer maschinenlesbaren ID-Nr. versehen und die gleiche ID-Nr. wird auf das Stückgut aufgebracht. Die ID-Nr. des Stückguts wird eingelesen und das Gut in ein automatisches Lager eingebracht. Das Paketlager kann sich beispielsweise bei einem Postamt befinden. Zur Abholung der Paketsendung steckt der Empfänger die Benachrichtigungskarte in eine dafür vorgesehene Öffnung und führt seinen Personalausweis an einem entsprechenden Ausweisleser vorbei. Die ID-Nr. der Benachrichtigungskarte wird eingelesen und mit gespeicherten ID-Nummern der eingelagerten Paketsendungen verglichen. Befindet sich eine Sendung mit der betreffenden ID-Nr. in dem Lager, wird sie ausgegeben.

Aufgabe der Erfindung ist es, ein verbessertes Verfahren zur Lieferung einer Sendung bereitzustellen, bei dem ein Empfänger eine Sendung für den Fall, dass ihm die Sendung an einer Zustelladresse nicht übergeben werden konnte, flexibel und komfortabel an einem Aufbewahrungsort abholen kann. Dabei sollen insbesondere die genannten Nachteile vermieden und verschiedene mögliche Aufbewahrungsorte ermöglicht werden.

Aufgabe der Erfindung ist es ferner, eine Anordnung zur Durchführung des Verfahrens bereitzustellen. Mit der Anordnung soll insbesondere die Auslastung bekannter Paketfachanlagen erhöht werden.

Diese Aufgabe wird durch ein Verfahren gemäß Anspruch 1 gelöst. Die Aufgabe wird ferner durch eine Anordnung zur Durchführung des Verfahrens gemäß Anspruch 11 gelöst. Weitere vorteilhafte und zweckmäßige Ausgestaltungen ergeben sich aus den Unteransprüchen 2-10 und 12-13.

Erfindungsgemäß wird ein Verfahren zur Lieferung einer Sendung, bei dem die Sendung zu einer Zustelladresse transportiert wird, an der ein Benachrichtigungsmittel deponiert wird, falls festgestellt wird, dass keine Übergabe der Sendung an einen berechtigten Empfänger möglich ist, so durchgeführt, dass eine Zuordnung eines Beladungsplatzes einer Paketfachanlage zu dem Empfänger einer Sendung über ein gemeinsames Identifikationsmittel erfolgt. Dabei wird das Benachrichtigungsmittel wenigstens mit Informationen zur Kennzeichnung der Paketfachanlage, Daten des Empfängers und mit dem Identifikationsmittel versehen.

Es erfolgt eine Verbindung einer zentralen Datenverwaltungseinheit mit wenigstens einer elektronischen Paketfachanlage zur Übermittlung von Informationen über freie Fächer der Paketfachanlage an die Datenverwaltungseinheit. Die Information über freie Fächer wird eine mobile Vorrichtung zur Erzeugung von Informationen über freie Fächer einer Paketfachanlage übermittelt, welche der Zusteller vorzugsweise mit sich führt.

Kann ein Zusteller eine Sendung nicht an einen berechtigten Empfänger übergeben, erfolgt eine Auswertung der Informationen der mobilen Vorrichtung über freie Fächer einer Paketfachanlage und eine Zuordnung eines Beladungsplatzes einer Paketfachanlage zu einem Empfänger der Sendung durch ein Identifikationsmittel, wobei das Benachrichtigungsmittel wenigstens mit Daten zur Kennzeichnung der Paketfachanlage, Daten des Empfängers und dem Identifikationsmittel versehen wird. Der Zusteller kann einen Beladungsplatz auswählen und ordnet den nicht angetroffenen Empfänger über ein Identifikationsmittel dem Beladungsplatz einer Paketfachanlage zu. Da der Empfänger seiner Sendung zugeordnet werden kann, erfolgt indirekt auch eine Zuordnung zwischen der Sendung und einem Beladungsplatz.

Bei dem Beladungsplatz handelt es sich um ein freies Fach der betreffenden Paketfachanlage. Dabei kann eine feste Reservierung eines Faches erfolgen, so dass der Zusteller die Sendung an einer Paketfachanlage in das dem Empfänger zugeordnete Fach deponieren muss. In einem anderen bevorzugten Ausführungsbeispiel der Erfindung erfolgt keine feste Reservierung, sondern dem Identifikationsmittel wird lediglich ein potenziell freies Fach zugeordnet. Die endgültige Zuordnung zu einem bestimmten Fach erfolgt dabei erst an der Paketfachanlage.

Die Zuordnung eines Identifikationsmittels zu einem Beladungsplatz einer Paketfachanlage kann prinzipiell vor oder nach der Feststellung erfolgen, dass an der Zustelladresse keine Übergabe der Sendung an einen berechtigten Empfänger möglich ist. Die Zuordnung des Codes zu einem Beladungsplatz erfolgt jedoch vorzugsweise nach der Feststellung, dass eine Sendung nicht übergeben werden konnte. Dazu werden dem Zusteller an der Zustelladresse aktuelle Informationen über freie Fächer in seinem Zustellbezirk übermittelt. Die Übermittlung erfolgt beispielsweise über eine tragbare Vorrichtung wie ein Handheld, welches in Verbindung mit einer zentralen Datenverwaltungseinheit steht, welche Informationen über aktuelle Kapazitäten speichert und verwaltet. Eine Benachrichtigungskarte wird somit erst vor Ort mit den Standortinformationen einer Paketfachanlage versehen. Das Identifikationsmittel kann sich dabei bereits auf einer vorgefertigten Karte befinden oder ebenfalls erst im Zeitpunkt der Zustellung erzeugt und aufgebracht werden. Die Zuordnung zu einem Empfänger erfolgt auch in diesem Ausführungsbeispiel durch den Zusteller, welcher die entsprechenden Empfängerdaten auf der Karte anbringt.

Das erzeugte Benachrichtigungsmittel wird vom Zusteller an der Zustelladresse hinterlegt und die Sendung zu der Paketfachanlage transportiert, in welcher dem Empfänger der Sendung ein Fach zugeordnet wurde. Es hat sich als vorteilhaft erwiesen, dass die Zuordnung zu einem freien Fach keine Zuordnung zu einem festgelegten Fach der Paketfachanlage beinhaltet, sondern lediglich die Zuordnung zu einem von mehreren möglichen Fächern. Dies kann jedoch beispielsweise eine Zuordnung zu einer Gruppe von Fächern gleicher Größe einschließen.

Bei der Deponierung der Sendung durch den Zusteller wird wenigstens das dem Empfänger der Sendung zugeordnete Identifikationsmittel erfasst. Das Identifikationsmittel wird zu dem Fach gespeichert, in welchem die Sendung deponiert wurde. Für einen späteren Vergleich zwischen dem Abholer und dem eigentlichen Empfänger werden zweckmäßigerweise zusätzlich Empfängerdaten erfasst. Handelt es sich um eine Nachnahmesendung, wird außerdem ein damit verbundener Geldbetrag und Versendername erfasst. Die Entrichtung dieses Geldbetrages ist zweckmäßigerweise eine Bedingung für die Ausgabe der Sendung bei Abholung der Sendung durch einen Abholer.

Bei der Abholung der Sendung an der Paketfachanlage durch einen Abholer wird wenigstens das dem Empfänger zugeordnete Identifikationsmittel erfasst, welches sich auf dem Benachrichtigungsmittel befindet. Soll dazu ein Barcode eingescannt werden, muss der Abholer die Karte demnach mit zur Paketfachanlage bringen. Muss durch den Abholer beispielsweise nur ein Zahlen- oder Buchstabencode eingegeben werden, reicht es aus, wenn der Abholer diesen auswendig eingeben kann.

Nach der Erfassung des dem Empfänger zugeordneten Identifikationsmittels erfolgt ein Vergleich desselben mit den für die Fächer der Paketfachanlage gespeicherten Identifikationsmitteln. Ergibt das Ergebnis des Vergleiches, dass das dem Empfänger zugeordnete Identifikationsmittel mit einem der gespeicherten Identifikationsmittel übereinstimmt, erfolgt die Ausgabe der Sendung.

Handelt es sich bei der Sendung um eine Nachnahmesendung, kann eine Bedingung für die Ausgabe der Sendung sein, dass der Abholer vorher einen Geldbetrag entrichtet. Die Entrichtung des Geldbetrages kann beispielsweise über eine Kartenfunktion mit EC-Karten oder Bargeld erfolgen.

Eine weitere Bedingung für die Ausgabe einer Sendung kann die Übereinstimmung zwischen Empfänger und Abholer sein. Dazu ist es zweckmäßig, dass Abholerdaten erfasst werden. Stimmen diese mit den vom Zusteller eingegebenen Empfängerdaten überein, kann daraufhin eine Ausgabe der Sendung erfolgen. Im Falle der Nicht-Übereinstimmung von Empfängerdaten und Abholerdaten wird vorzugsweise eine Funktion aktiviert, über welche sich der Abholer als Ersatzempfänger angeben kann, was eine Bedingung für die Ausgabe der Sendung sein kann.

Da sich Empfänger- und Abholerdaten beispielsweise aufgrund von verschiedenen Schreibweisen oder Schreibfehlern unterscheiden können, so dass kein 100% positiver Abgleich möglich ist, sieht ein besonders bevorzugtes Ausführungsbeispiel der Erfindung vor, dass die Übereinstimmung der Daten nur einen bestimmten Grad erfüllen muss. Die Übereinstimmung lässt sich ferner auf einen Teil der Daten reduzieren, so dass beispielsweise nur die erfassten Nachnamen verglichen werden.

Da für verschiedene Sendungen eine Nachweispflicht besteht, so dass die Abholung bestätigt und der Abholer gegebenenfalls identifizierbar sein muss, birgt die Eingabe von Daten durch den Abholer ein hohes Fälschungs- und Betrugsrisiko. Zur Bestätigung der Abholung kann daher die Unterschrift des Abholers erfasst werden. Dies kann durch Abgabe der Unterschrift beispielsweise über einen Touchscreen oder durch Einlesen der Unterschrift von bereits mit der Unterschrift versehenen Mitteln erfolgen. Zu diesen Mitteln zählen beispielsweise die Benachrichtigungskarte und/oder ein Personalausweis. Die Abholerdaten können ebenfalls von mit diesen Daten versehenen Mitteln erfasst werden.

Die erfindungsgemäße Anordnung zur Durchführung eines Verfahrens zur Lieferung einer Sendung umfasst wenigstens eine zentrale Datenverwaltungseinheit und eine elektronische Paketfachanlage, die jeweils Mittel zum Datenaustausch aufweisen, wobei die Paketfachanlage wenigstens Mittel zur Erfassung, zur Speicherung und zum Vergleich von Identifikationsmitteln aufweist. Die Anordnung umfasst ferner wenigstens Mittel zur Erzeugung eines Identifikationsmittels, wobei das Identifikationsmittel der Zuordnung eines Empfängers einer Sendung zu einem Beladungsplatz einer Paketfachanlage der Anordnung dient. Zu der Anordnung gehören ferner Mittel zur Erzeugung von Informationen über Beladungsplätze einer Paketfachanlage, wobei die Informationen der Zuordnung eines Empfängers einer Sendung zu einem Beladungsplatz dienen. Zur Erzeugung eines Benachrichtigungsmittels sind ebenfalls Mittel vorgesehen, wobei das Benachrichtigungsmittel mit Daten zur Kennzeichnung einer Paketfachanlage, Daten des Empfängers und dem Identifikationsmittel versehbar ist.

Das erfindungsgemäße Verfahren und die Anordnung zur Durchführung des Verfahrens weisen diverse Vorteile auf. Der Empfänger kann beispielsweise seine Sendung abholen, sobald sie vom Zusteller in einer Paketfachanlage deponiert wurde. Dies kann im günstigsten Fall sofort nach Erhalt der Benachrichtigungskarte sein. Dabei ist er völlig unabhängig von Öffnungszeiten einer Filiale, so dass er den Zeitpunkt der Abholung frei wählen kann. Dies stellt für ihn einen hohen Grad an Flexibilität dar und Filialen eines Postunternehmens werden außerdem von Aufgaben wie der Paketausgabe entlastet.

Die Abholung erfordert ferner keine Registrierung, für welche der Nutzer persönliche Daten angeben muss. Für ein Postunternehmen stellt das Verfahren außerdem einen einfachen Weg dar, nicht-registrierte Empfänger in den Nutzen von Paketfachanlagen zu bringen, ohne dass umfangreiche Datenerfassungs- und Datenhaltungsmaßnahmen erforderlich sind. Dadurch lässt sich die Auslastung von Paketfachanlagen erhöhen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung der Abläufe bei dem erfindungsgemäßen Verfahrens; und
- Fig. 2: ein besonders bevorzugtes Ausführungsbeispiel eines Benachrichtigungsmittels.

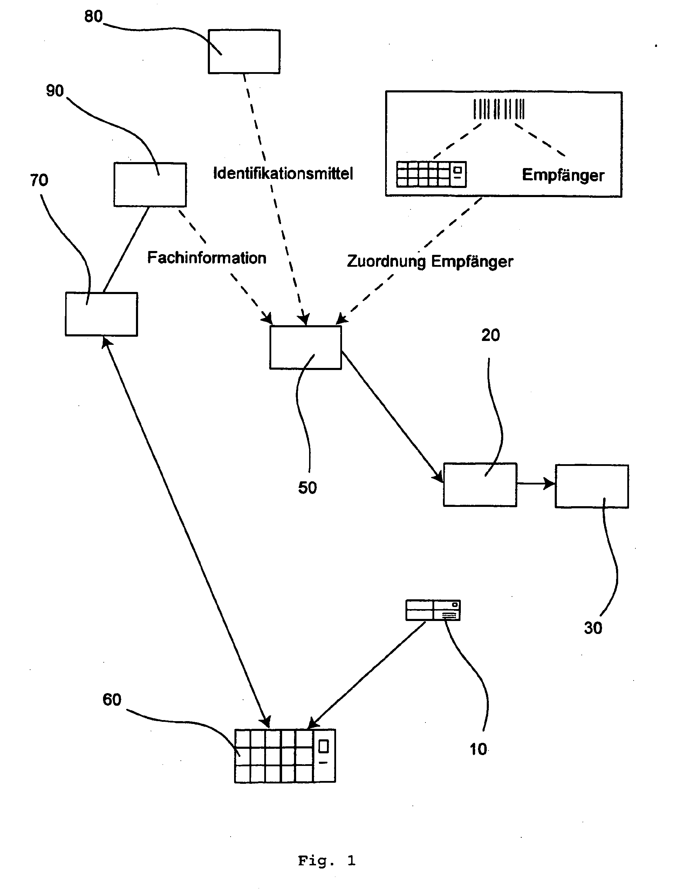

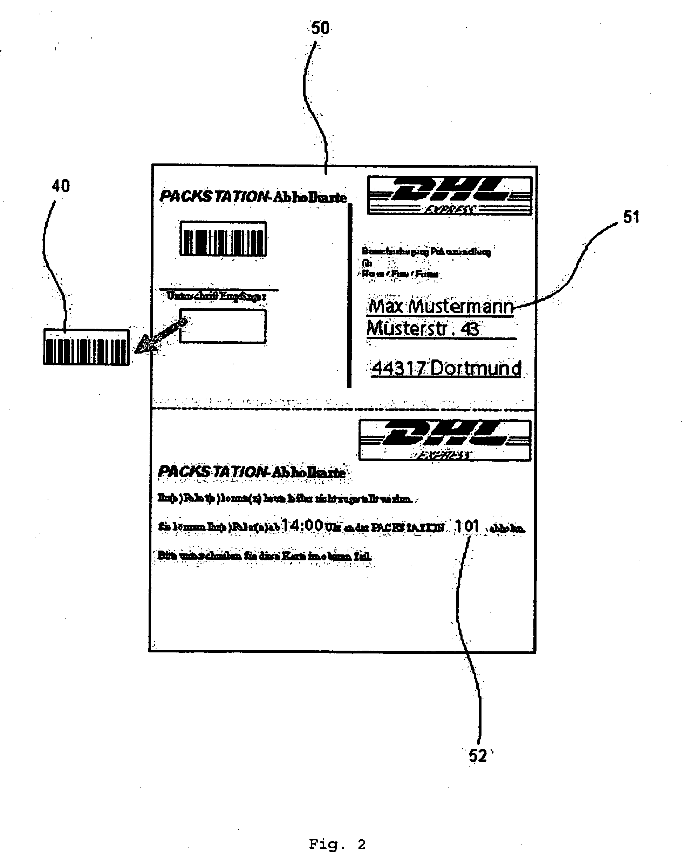

Fig. 1 zeigt eine schematische Darstellung der Abläufe bei dem erfindungsgemäßen Verfahren. Stellt ein Zusteller an einer Zustelladresse 20 fest, dass er eine Sendung 10 nicht an einen berechtigten Empfänger 30 übergeben kann, hinterlegt er an der Zustelladresse ein Benachrichtigungsmittel 50 und transportiert die Sendung zu einer Paketfachanlage 60. Bei dem Benachrichtigungsmittel 50 handelt es sich vorzugsweise um eine Benachrichtigungskarte, wie sie beispielhaft in Fig. 2 dargestellt ist. Das Benachrichtigungsmittel 50 ist wenigstens mit Informationen 52 zur Kennzeichnung einer Paketfachanlage mit freien Fächern, Daten 51 des Empfängers und einem Identifikationsmittel 40 versehen.

Das Identifikationsmittel wird in der erfindungsgemäßen Anordnung durch ein Mittel 80 erzeugt, während ein weiteres Mittel 90 Informationen über freie Fächer einer Paketfachanlage bereitstellt. Das Mittel 90 zur Erzeugung von Informationen über freie Fächer ist vorzugsweise mit einer zentralen Datenverwaltungseinheit 70 verbindbar, wobei die Datenverwaltungseinheit mit wenigstens einer Paketfachanlage der gesamten Anordnung verbindbar ist. Vorzugsweise werden Daten über alle Anlieferungs- und Abholvorgänge an einer Paketfachanlage der Datenverwaltungseinheit übermittelt, wo sie gespeichert werden. So verfügt die Datenverwaltungseinheit über aktuell verfügbare freie Fächer und kann diese Informationen beispielsweise einem mobilen Mittel 90 übergeben.

In einem besonders bevorzugten Ausführungsbeispiel der Erfindung erfolgt bei der Zuordnung eines Empfängers zu einem Beladungsplatz einer Paketfachanlage auch die Reservierung eines bestimmten Faches für die Sendung des Empfängers. Dies kann beispielsweise über das mobile Gerät 90 geschehen, welches der Zusteller mit sich führt, so dass er die Reservierung eines Faches an ein zuständiges Mittel übermitteln kann. Dabei kann es sich beispielsweise direkt um die betreffende Paketfachanlage oder die zentrale Datenverwaltungseinheit handeln, welche die Information dann an die Paketfachanlage weitergibt.

In einem weiteren besonders bevorzugten Ausführungsbeispiel der Erfindung erfolgt bei der Zuordnung eines Empfängers zu einem Beladungsplatz einer Paketfachanlage noch keine Reservierung eines bestimmten Faches, sondern die endgültige Belegung wird erst durchgeführt, wenn der Zusteller eine Sendung an einer Paketfachanlage einstellen möchte.

Die Zuordnung eines freien Faches zu einem Empfänger über ein Identifikationsmittel erfolgt durch den Zusteller. Die Zuordnung fließt in die Erzeugung des Benachrichtigungsmittels ein. Dabei kann das Benachrichtigungsmittel auf verschiedene Arten erzeugt werden.

In einem besonders bevorzugten Ausführungsbeispiel der Erfindung wird vor der Zustelltour eines Zustellers für jedes verfügbare Fach im Bereich der Zustelltour ein Benachrichtigungsmittel erstellt. Dies geschieht beispielsweise dadurch, dass in einer Zustellbasis über eine Anwendung eine Benachrichtigungskarte gedruckt wird. In diesem Fall befinden sich sowohl das Mittel 80 zur Erzeugung eines Identifikationsmittels 40 und das Mittel zur Erzeugung von Informationen über freie Fächer im Bereich der Zustellbasis.

Zweckmäßigerweise handelt es sich bei dem Identifikationsmittel um einen Barcode. Als besonders vorteilhaft hat es sich erwiesen, dass sich das Identifikationsmittel in 2-facher Ausführung auf der Benachrichtigungskarte befindet. Beispielsweise kann der Code einmal direkt auf die Karte und einmal auf einen abziehbaren Aufkleber gedruckt sein. Der Zusteller kann so den Aufkleber abziehen und auf die Sendung aufbringen, welche er benachrichtigt. Dies hat den Vorteil der Zuordnung nicht nur des Empfängers sondern auch der Sendung zu dem vergebenen Code.

Eine derartige Benachrichtigungskarte kann ferner Standortinformationen einer Paketfachanlage und/oder eine Fachgrößenangabe aufweisen. Der Zusteller kann so für jedes verfügbare Fach im Bereich der Zustelltour eine Karte mit auf die Tour nehmen. Der Zusteller verfügt also bereits vor der Zustelltour über Informationen über die Anzahl und Größe freier Fächer, was die Kapazitätsplanung erleichtert.

Erreicht nun ein Zusteller die Zustelladresse eines Empfängers, trifft den Empfänger oder einen berechtigten Ersatzempfänger aber nicht an, so hinterlässt er eine der mitgeführten Benachrichtigungskarten an dieser Zustelladresse. Er wählt dazu eine Benachrichtigungskarte aus, auf welcher die nächstliegende Paketfachanlage vermerkt ist, welche über ein freies Fach der geeigneten Größe verfügt. Der Zusteller trägt bestimmte Personendaten des Empfängers auf der Karte ein und löst das aufgeklebte Identifikationsmittel von der Benachrichtigungskarte ab. Das abgelöste Identifikationsmittel bringt er vorzugsweise auf der auszuliefernden Sendung an. In einem besonders bevorzugten Ausführungsbeispiel der Erfindung vermerkt der Zusteller auf der Benachrichtigungskarte weitere Informationen wie beispielsweise einen bei Abholung zu entrichtenden Nachnahmebetrag und/oder den frühstmöglichen Termin zur Abholung der Sendung.

Wird kein zweifaches Identifikationsmittel zum Ablösen verwendet, können andere Arten der Erfassung und Übertragung der vergebenen Identifikation zum Einsatz kommen. Der Zusteller kann sich beispielsweise das Identifikationsmittel der Benachrichtigungskarte notieren und/oder es manuell auf die Sendung aufbringen. Er schreibt dabei zum Beispiel einen Nummern-oder Buchstabencode auf die Sendung.

In einem weiteren besonders bevorzugten Ausführungsbeispiel der Erfindung erfolgt die Erzeugung von Benachrichtigungskarten nicht im Vorfeld einer Zustelltour, sondern der Zusteller kann bei Bedarf an einer Zustelladresse ein Benachrichtigungsmittel erzeugen. Dazu kann er beispielsweise über eine tragbare Vorrichtung wie ein Handheld verfügen, welches Verbindung mit der zentralen Datenverwaltungseinheit 70 hat. Bei dieser Verbindung kann es sich beispielsweise um eine Funkverbindung oder eine GSM-Verbindung handeln. Das Mittel 90 zur Erzeugung von Informationen über freie Fächer würde sich demnach in der tragbaren Vorrichtung befinden und freie Fächer anzeigen und/oder auf ein Benachrichtigungsmittel aufbringen. Der Zusteller verfügt so immer über aktuelle Kapazitäten von Paketfachanlagen. Auch das Mittel 80 zur Erzeugung von Identifikationsmitteln kann sich in der tragbaren Vorrichtung befinden, so dass beispielsweise vor Ort ein erforderlicher Code erzeugt wird. In einem weiteren Ausführungsbeispiel der Erfindung führt der Zusteller vorgefertigte Benachrichtigungskarten mit sich, welche bereits mit einem Code versehen sind und lediglich durch Empfänger- und Paketfachanlagendaten ergänzt werden.

Dieses Verfahren hat den Vorteil, dass der Zusteller keine Benachrichtigungskarten für sämtliche freie Fächer von Paketfachanlagen mit sich führen muss. Ferner ist es vorteilhaft, dass dem Zusteller über die zentrale Datenverwaltungseinheit immer die aktuelle Auslastung der Paketfachanlagen zur Verfügung steht, wobei er auch Informationen über Paketfachanlagen außerhalb seines Zustellbezirkes anfordern kann.

Die Deponierung von Sendungen, über welche ein Empfänger wie beschrieben benachrichtigt wurde, kann abhängig von der Vorgangsart verschiedene Varianten umfassen. Bei der einfachsten Variante handelt es sich beispielsweise um eine nicht nachweispflichtige Sendung. Der Zusteller meldet sich an der Paketfachanlage an, was auf bekannte Weise beispielsweise über eine Identifikationskarte und/oder einen Pincode erfolgen kann. Danach wählt er über eine elektronische Steuerung der Paketfachanlage die Option der Einlieferung einer benachrichtigten Sendung aus. Wird als Identifikationsmittel ein Barcode verwendet, scannt der Zusteller diesen auf der betreffenden Sendung ein. Der Zusteller wählt eine benötigte Fachgröße, und stellt die Sendung in ein Fach ein. Das Fach wird geschlossen und die Einlieferung ist beendet. Die erfassten Daten werden an die zentrale Datenverwaltungseinheit 70, bei der es sich beispielsweise um einen Server handelt, übermittelt.

Handelt es sich bei der einzuliefernden Sendung um eine Nachnahmesendung, für welche der Empfänger bei Empfang einen Geldbetrag zu entrichten hat, kommt zweckmäßigerweise eine weitere Ausführungsform der Erfindung zur Anwendung, da zusätzlich ein Nachnahmebetrag erfasst werden muss. Die Identifikation und die Erfassung des Identifikationsmittels kann beispielsweise beibehalten werden, wobei der Zusteller vorher eine spezielle Option "Nachnahmeeinlieferung" gewählt haben kann. Der Zusteller kann so den Nachnahmebetrag und vorzugsweise auch den Namen des Versenders eingeben. Die weiteren Schritte des Einlieferungsprozesses können denen bei nicht nachweispflichtiger Sendung entsprechen. Zusätzlich kann der Zusteller einen sendungsbezogenen Identifikationscode erfassen, welcher sich beispielsweise ebenfalls als Aufkleber auf der Sendung befindet.

Die Abholung benachrichtigter Sendungen aus einer Paketfachanlage stellt die vereinfachte Abholung in einer Filiale eines Zustellunternehmens dar und erfolgt ebenfalls abhängig von der Vorgangsart. Dabei ist eine Identifikation des Abholers zu realisieren, die vorzugsweise den Erfordernissen bei der Abholung in der Filiale entsprechen sollte. So soll vermieden werden, dass eine Person unberechtigt in den Besitz einer Benachrichtigungskarte kommt und unberechtigt eine Sendung aus einer Paketfachanlage erhält. Zumindest soll ein Abholer soweit identifizierbar sein, dass er bei unberechtigter Abholung festgestellt werden kann. An die Identifikation des Abholers bei einer nicht nachweispflichtigen Sendung sind daher andere Anforderungen zu stellen als an die Identifikation bei einer nachweispflichtigen Sendung. Die jeweiligen Prozesse an einer Paketfachanlage unterscheiden sich also zweckmäßigerweise.

Die einfachste Variante stellt auch hier die Abholung einer nicht nachweispflichtigen Sendung durch einen benachrichtigten Empfänger oder eine berechtigte Ersatzperson dar. Der Empfänger oder eine berechtigte Ersatzperson begeben sich zu einer Paketfachanlage und führen eine Benachrichtigungskarte mit sich. Da eine Paketfachanlage auch für andere Vorgangsarten einsetzbar ist, hat es sich als zweckmäßig erwiesen, für das erfindungsgemäße Verfahren einen speziellen Menüpunkt in einer elektronischen Steuerung der Paketfachanlage vorzusehen. Der Abholer wählt somit den entsprechenden Menüpunkt aus und wird daraufhin beispielsweise aufgefordert, das Identifikationsmittel der Benachrichtigungskarte zu erfassen. Je nach Identifikationsmittel kann der Empfänger den Barcode einscannen oder einen Code über ein Eingabemittel eingeben. Die Paketfachanlage ordnet dem Identifikationsmittel daraufhin eine deponierte Sendung zu und gibt diese aus.

Zur Abholung von nicht nachweispflichtigen Sendungen in einer Filiale eines Postunternehmens genügt zur Bestätigung der Abholung beispielsweise die Unterschrift des Abholers. Um dies in einer Paketfachanlage abzubilden, wird der Abholer in einem besonders bevorzugten Ausführungsbeispiel der Erfindung Empfänger dazu aufgefordert, ebenfalls seine Unterschrift abzugeben. Dies kann beispielsweise über einen Touchscreen erfolgen. In einem weiteren besonders bevorzugten Ausführungsbeispiel der Erfindung unterschreibt der Abholer die Benachrichtigungskarte und übergibt diese der Paketfachanlage. Dies kann beispielsweise durch das Einlegen in ein Fach erfolgen. Das Einlegen in ein Fach hat den Vorteil, dass sowohl das Identifikationsmittel als auch der Barcode direkt von der Benachrichtigungskarte eingelesen werden können, wobei gleichzeitig weitere Informationen wie die Unterschrift fotografiert werden können.

Da handschriftliche Texte auf der Benachrichtigungskarte fehlerhaft oder unleserlich sein können, kann es ferner zweckmäßig sein, die Identität des Abholers eindeutig lesbar zu erfassen, indem er seine Personendaten über eine Tastatur eingibt. Dabei ist zu beachten, dass es sich dabei auch um unrichtige Angaben handeln kann, so dass nicht sicher festgestellt werden kann, ob es sich um einen berechtigten Abholer handelt. Bei nicht nachweispflichtigen Sendungen ist ein Nachweis der Auslieferung an den Empfänger jedoch nicht notwendig. Falls ein Nachweis dennoch zweckmäßig ist, kann dies an dieser Stelle durchgeführt werden.

Nach der Bestätigung durch die Unterschrift oder weiterer I-dentitätsangaben, wird die Sendung zur Entnahme freigegeben. Der Empfänger entnimmt die Sendung und schließt das Fach. Die Paketfachanlage sendet daraufhin zweckmäßigerweise eine Nachricht über das Ereignis an die zentrale Datenverwaltungseinheit.

Wurde eine nachweispflichtige Nachnahmesendung in eine Paketfachanlage eingebracht, hat sich bei der Abholung ein anderer Prozess als zweckmäßig erwiesen. Möchte ein Empfänger eine nachweispflichtige Nachnahmesendung, für welche er eine Benachrichtigungskarte erhalten hat, an einer Paketfachanlage abholen, begibt er sich zu der entsprechenden Paketfachanlage, wobei er die Benachrichtigungskarte und eine Geldkarte mitführen muss, welche von der Paketfachanlage akzeptiert wird. In einer anderen Ausführungsform der Erfindung besteht für den Abholer die Möglichkeit der Entrichtung eines Geldbetrags durch Barzahlung.

Nach der Wahl eines Menüpunktes für Nachnahmesendungen kann eine Erfassung des Identifikationsmittels der abzuholenden Sendung erfolgen, wie es bereits beschrieben wurde. Die Paketfachanlage ordnet die Sendung zu und zeigt in einem besonders bevorzugten Ausführungsbeispiel den zu entrichtenden Nachnahmebetrag und den Versender an. Daraufhin wird der Kunde aufgefordert, die Sendung per Geldkarte zu bezahlen. Dabei kann beispielsweise die Eingabe einer PIN gefordert werden. Nach erfolgreicher Bezahlung wird der Empfänger vorzugsweise dazu aufgefordert, auf einem Touchscreen zu unterschreiben. Nach einer Bestätigung der Unterschrift, wird die Sendung zur Entnahme freigegeben. In einem besonders bevorzugten Ausführungsbeispiel der Erfindung wird eine Quittung über die Bezahlung der Sendung gedruckt. Der Empfänger entnimmt die Quittung und die Sendung und schließt das Fach. Die Paketfachanlage sendet eine entsprechende Nachricht über die Entnahme an die zentrale Datenverwaltung.

Als Geldkarte können beispielsweise EC-Karten und/oder Kreditkarten eingesetzt werden. Besteht die Möglichkeit, aus einer Geldkarte die Identität des Abholers zu ermitteln, ist dies besonders vorteilhaft, da dadurch von einem Mittel zwei Funktionen erfüllt werden. Ist die Identität des Abholers durch die Geldkarte nicht erfassbar, können andere Verfahren zur Anwendung kommen.

Beispielsweise kann die Identifizierung des Abholers an der Paketfachanlage über die Benachrichtigungskarte und den Personalausweis erfolgen. Der Paketempfänger hat dazu die Benachrichtigungskarte mit dem aufgedruckten Benachrichtigungscode und der Packstation erhalten und unterschrieben. Er hat sich zur angegebenen Paketfachanlage begeben und führt die Benachrichtigungskarte und seinen Personalausweis mit sich. Der Benutzer wählt über einen Menüpunkt aus, dass er ein benachrichtigtes Paket entnehmen möchte. An der Paketfachanlage öffnet sich daraufhin ein Scannerfach. Der Paketempfänger wird aufgefordert, die unterschriebene Benachrichtigungskarte einzulegen. Das Fach schließt sich und der Benachrichtigungscode wird von der Karte gelesen. Ferner wird die Unterschrift fotografiert und die Karte wird wieder ausgegeben.

Nach erfolgreicher Prüfung des Benachrichtigungscodes wird der Paketempfänger aufgefordert, sich mit seinem Personalausweis zu identifizieren und diesen in das Scannerfach einzulegen. Aus dem Personalausweis können beispielsweise verschiedene Daten ausgelesen werden. Dazu zählen vorzugsweise Vor- und Nachname, Adresse, Ausweisnummer und zusätzlich die Unterschrift. Nachdem die Daten ausgelesen wurden, wird der Ausweis wieder ausgegeben und kann vom Empfänger entnommen werden.

Ist der Abgleich von Namen und Adresse auf dem Paket und dem Ausweis erfolgreich, wird das entsprechende Fach geöffnet und der Kunde kann sein Paket entnehmen. War der Abgleich nicht erfolgreich, kann zweckmäßigerweise über die Menüführung abgefragt werden, ob der Abholer vom Empfänger zur Abholung ermächtigt ist. Wird dies bejaht, könnte das Paket auch ausgegeben werden, da die Ausweisdaten des Abholers im Falle eines unberechtigten Abholens vorliegen. Da im Falle von fehlerhaft eingegebenen Namen oder Anschriften vom Absender kein positiver Abgleich zwischen den angegebenen Daten und den von dem Personalausweis eingelesenen korrekten Daten erfolgen kann, kann für diesen Fall eine Ersatzfunktion vorgesehen sein, so dass der Empfänger in jedem Fall seine Sendung erhält. Dies kann beispielsweise über die gleiche Funktion erfolgen, welche die Abholung durch einen Ersatzempfänger abwickelt. Alle erfassten Daten werden gespeichert, so dass im Schadensfall bzw. im Recherchefall die Identität des Abholers nachvollzogen werden kann.

In einem anderen bevorzugten Ausführungsbeispiel der Erfindung wird beim Abgleich ein Übereinstimmungsgrad zwischen den Daten des angegebenen Empfängers und den Daten des Abholers festgelegt. Der Übereinstimmungsgrad könnte beispielsweise 70% betragen, so dass geringe Abweichungen durch unterschiedliche Schreibweisen oder Rechtschreibfehler nicht zur Verweigerung einer Sendung führen. In einer weiteren Ausführungsform wird beispielsweise nur der Nachname eines Abholers bewertet. Ergibt keiner der Prozesse eine ausreichende Übereinstimmung, wird die Ausgabe des Paketes verweigert.

Die Identifizierung über einen Personalausweis hat den Vorteil, dass es für den Benutzer sehr einfach durchzuführen ist, da er lediglich seinen Ausweis einlegen muss. Gleichzeitig ist für den Betreiber der Paketfachanlage eine hohe Sicherheit gewährleistet, da nicht nur Name und Adresse des Abholers und des Empfängers bekannt sind, sondern der Abholer im Schadensfall eindeutig über seine Personalausweisnummer identifiziert werden kann.

In einem weiteren besonders bevorzugten Ausführungsbeispiel der Erfindung erfolgt die Identifizierung des Abholers über die Vorlage einer beliebigen Ausweiskarte, die den Namen enthält. Dabei kann es sich beispielsweise um eine Krankenkassenkarte oder einen Führerschein handeln. Ist die Identität des Benutzers auf der Karte gespeichert, kann diese durch die Paketfachanlage ausgelesen werden. Ist dies nicht der Fall oder ist ein Auslesen der Identität nicht erlaubt, kann der Benutzer beispielsweise dazu aufgefordert werden, die unterschriebene Karte in ein Fach der Paketfachanlage einzulegen. Das Fach wird geschlossen und die Karte von beiden Seiten abgescannt. Der Abholer kann zusätzlich dazu aufgefordert werden, auf einem Unterschriften-Pad zu unterschreiben. Danach kann er seine Karte und das Paket entnehmen.

In einem weiteren besonders bevorzugten Ausführungsbeispiel der Erfindung übergibt der Versender dem Empfänger und dem zustellenden Postunternehmen mit einer sendungsbegleitenden Information eine hauseigene Kundennummer oder eine TAN, die der Empfänger zusätzlich zum Benachrichtigungscode an der Paketfachanlage eingeben muss, um die Sendung zu entnehmen. Dieses Verfahren sichert den Nachweis, dass Empfänger und Abholer eine Person sind. Zusätzlich kann bei Bedarf noch die Unterschrift des Abholers eingefordert werden.

Als weiteres Mittel zur Sicherung der Identität des Abholers kann bei der Abholung ein Foto des Abholers erzeugt werden. In einem weiteren Ausführungsbeispiel erfolgt die Identifikation über einen Anruf eines Mobiltelefons inklusive Rufnummernübertragung an einer bestimmten Nummer des Paketfachanlagen-Systems. Über den Kartenvertrag des Mobilfunktelefons kann so der Inhaber des Telefons verifiziert werden.

### Bezugszeichenliste:

- 10: Sendung
- 20: Zustelladresse
- 30: Empfänger
- 40: Identifikationsmittel, Barcode
- 50: Benachrichtigungsmittel, Benachrichtigungskarte
- 51: Empfängerdaten
- 52: Daten zur Kennzeichnung einer Paketfachanlage
- 60: Paketfachanlage
- 70: Zentrale Datenverwaltungseinheit, Server
- 80: Mittel zur Erzeugung eines Identifikationsmittels
- 90: Mittel zur Erzeugung von Informationen über freie Fächer einer Paketfachanlage

## Patentansprüche

1. Verfahren zur Lieferung einer Sendung (10) zu einer von mehreren elektronischen Paketfachanlagen (60), bei dem die Sendung zu einer Zustelladresse (20) transportiert wird, an der ein Benachrichtigungsmittel (50) deponiert wird, falls festgestellt wird, dass keine Übergabe der Sendung (10) an einen berechtigten Empfänger (30) möglich ist, wobei das Benachrichtigungsmittel (50) wenigstens mit Daten zur Kennzeichnung der Paketfachanlage (60), Daten des Empfängers (30) und einem Identifikationsmittel (40) versehen wird, und eine Deponierung der Sendung (10) in einem Fach einer elektronischen Paketfachanlage (60) erfolgt, wobei wenigstens das dem Empfänger (30) der Sendung (10) zugeordnete Identifikationsmittel (40) erfasst und zu dem betreffenden Fach gespeichert wird; und ferner eine Abholung der Sendung (10) an der Paketfachanlage (60) durch einen Abholer erfolgt, wobei
- wenigstens das dem Empfänger (30) der Sendung (10) zugeordnete Identifikationsmittel (40) erfasst wird,
- ein Vergleich des dem Empfänger (30) der Sendung (10) zugeordneten Identifikationsmittels (40) mit den für belegte Fächer gespeicherten Identifikationsmitteln erfolgt, und
- die Ausgabe der deponierten Sendung (10) aus einem Fach erfolgt, falls das Ergebnis des Vergleiches ergibt, dass das dem Empfänger zugeordnete Identifikationsmittel (40) mit einem zu dem betreffenden Fach gespeicherten Identifikationsmittel übereinstimmt,
**gekennzeichnet,**
**durch** folgende Schritte vor der Deponierung des Benachrichtigungsmittels (50):
- Verbindung einer zentralen Datenverwaltungseinheit (70) mit wenigstens einer elektronischen Paketfachanlage (60) zur Übermittlung von Informationen über freie Fächer der Paketfachanlage (60) an die Datenverwaltungseinheit (70) und Übermittlung der Information über freie Fächer an eine mobile Vorrichtung (90) zur Erzeugung von Informationen über freie Fächer einer Paketfachanlage (60); und
- Auswertung der Informationen der mobilen Vorrichtung (90) über freie Fächer einer Paketfachanlage (60) und Zuordnung eines Beladungsplatzes einer Paketfachanlage (60) zu einem Empfänger (30) der Sendung (10) durch ein Identifikationsmittel (40).

2. Verfahren nach Anspruch 1,
**dadurch gekennzeichnet,**
**dass** die Zuordnung eines Identifikationsmittels (40) zu einem Beladungsplatz einer Paketfachanlage (60) vor der Feststellung erfolgt, dass an der Zustelladresse (20) keine Übergabe der Sendung (10) an einen berechtigten Empfänger (30) möglich ist.

3. Verfahren nach Anspruch 1,
**dadurch gekennzeichnet,**
**dass** die Zuordnung eines Identifikationsmittels (40) zu einem Beladungsplatz einer Paketfachanlage (60) nach der Feststellung erfolgt, dass an der Zustelladresse (20) keine Übergabe der Sendung (10) an einen berechtigten Empfänger (30) möglich ist.

4. Verfahren nach einem oder mehreren der vorangegangenen Ansprüche 1 bis 3,
**dadurch gekennzeichnet,**
**dass** mit der Zuordnung eines Empfängers (30) zu einem Beladungsplatz einer Paketfachanlage (60) durch ein Identifikationsmittel (40) die Reservierung eines Faches einer Paketfachanlage (60) erfolgt, wobei die Reservierung über das mobile Gerät (90) erfolgt.

5. Verfahren nach einem oder mehreren der vorangegangenen Ansprüche 1 bis 4,
**dadurch gekennzeichnet,**
**dass** bei der Deponierung der Sendung (10) in der Paketfachanlage (60) und/oder bei der Abholung der Sendung (10) aus der Paketfachanlage (60) Daten über den jeweiligen Vorgang an die zentrale Datenverwaltungseinheit (70) übermittelt werden.

6. Verfahren nach einem oder mehreren der vorangegangenen Ansprüche 1 und 2,
**dadurch gekennzeichnet,**
**dass** bei der Deponierung der Sendung (10) in einer Paketfachanlage (60) ein Geldbetrag erfasst wird, und dass die Entrichtung dieses Geldbetrages eine Bedingung für die Ausgabe der Sendung (10) bei Abholung der Sendung durch einen Abholer ist.

7. Verfahren nach einem oder mehreren der vorangegangenen Ansprüche 1 bis 6,
**dadurch gekennzeichnet,**
**dass** bei der Deponierung der Sendung (10) Daten des Empfängers erfasst werden und bei der Abholung der Sendung (10) durch einen Abholer Daten des Abholers erfasst werden, und dass die Übereinstimmung dieser Daten eine Bedingung für die Ausgabe der Sendung (10) bei Abholung der Sendung durch einen Abholer ist, wobei im Falle der Nicht-Übereinstimmung von Empfängerdaten und Abholerdaten eine Funktion aktiviert wird, über welche sich der Abholer als Ersatzempfänger angeben kann, was eine Bedingung für die Ausgabe der Sendung (10) ist.

8. Verfahren nach einem oder mehreren der vorangegangenen Ansprüche 1 bis 7,
**dadurch gekennzeichnet,**
**dass** bei der Abholung der Sendung (10) durch einen Abholer die Unterschrift des Abholers erfasst wird.

9. Verfahren nach Anspruch 8,
**dadurch gekennzeichnet,**
**dass** die Unterschrift von einem mit der Unterschrift versehen Mittel erfasst wird, bei dem es sich um das Benachrichtigungsmittel (50) handelt.

10. Verfahren nach Anspruch 8,
**dadurch gekennzeichnet,**
**dass** die Unterschrift von einem mit der Unterschrift versehen Mittel erfasst wird, bei dem es sich um einen Personalausweis handelt.

11. Anordnung zur Durchführung eines Verfahrens zur Lieferung einer Sendung (10) zu einer von mehreren elektronischen Paketfachanlagen (60) nach einem oder mehreren der Ansprüche 1 bis 10, wobei die Anordnung wenigstens eine zentrale Datenverwaltungseinheit (70) und mehrere elektronische Paketfachanlagen (60) umfasst, die jeweils Mittel zum Datenaustausch aufweisen, und die Paketfachanlagen (60) wenigstens Mittel zur Erfassung, zur Speicherung und zum Vergleich von Identifikationsmitteln (40) aufweisen, und die Anordnung Mittel (80) zur Erzeugung eines Identifikationsmittels (40) aufweist, wobei das Identifikationsmittel (40) der Zuordnung eines Empfängers (30) einer Sendung (10) zu einem Beladungsplatz einer Paketfachanlage (60) der Anordnung dient, und die Anordnung ferner Mittel zur Erzeugung eines Benachrichtigungsmittels (50) aufweist, wobei das Benachrichtigungsmittel (50) mit Daten zur Kennzeichnung einer Paketfachanlage (60), Daten des Empfängers (30) und dem Identifikationsmittel (40) versehbar ist,
**dadurch gekennzeichnet,**
**dass** die Anordnung eine mobile Vorrichtung (90) zur Erzeugung von Informationen über freie Fächer einer Paketfachanlage (60) aufweist, wobei die mobile Vorrichtung (90) mit der zentralen Datenverwaltungseinheit (70) verbindbar ist und die Informationen der Zuordnung eines Empfängers (30) einer Sendung (10) zu einem Beladungsplatz dienen.

12. Anordnung nach Anspruch 11,
**dadurch gekennzeichnet,**
**dass** das Identifikationsmittel (40) aus einem Barcode, Ziffern- und/oder Buchstabencode besteht.

13. Anordnung nach einem oder beiden der Ansprüche 11 und 12,
**dadurch gekennzeichnet,**
**dass** das Benachrichtigungsmittel (50) mit zwei identischen Identifikationsmitteln (40) versehen ist, wobei wenigstens ein Identifikationsmittel (40) von dem Benachrichtigungsmittel (50) lösbar ist.

## Claims

1. A method for delivering a shipment (10) to one of several electronic parcel compartment systems (60), wherein the shipment is transported to a delivery address (20) at which a notification means (50) is deposited if it is determined that the shipment (10) cannot be handed over to an authorized recipient (30), whereby the notification means (50) is provided at least with data for identifying the parcel compartment system (60), with data about the recipient (30) and with the identification means (40), and depositing of the shipment (10) in a compartment of an electronic parcel compartment system (60) is carried out, whereby at least the identification means (40) associated with the recipient (30) of the shipment (10) is recorded and stored so as to match the compartment in question, and furthermore pick-up of the shipment (10) at the parcel compartment system (60) is carried out by a person picking up the shipment, whereby
- at least the identification means (40) associated with the recipient (30) of the shipment (10) is recorded,
- a comparison is made between the identification means (40) associated with the recipient (30) of the shipment (10) and the identification means stored for occupied compartments, and
- the deposited shipment (10) is released from a compartment if the result of the comparison shows that the identification means (40) associated with the recipient matches one of the identification means stored for the compartment in question,
**characterized by**
the following steps before depositing of the notification means (50):
- connection of a central data management unit (70) to at least one electronic parcel compartment system (60) in order to transmit information about free compartments in the parcel compartment system (60) to the data management unit (70) and transmission of the information about free compartments to a mobile device (90) in order to generate information about free compartments in a parcel compartment system (60); and
- evaluation of the information of the mobile device (90) about free compartments in a parcel compartment system (60) and association of a storage place in a parcel compartment system (60) with a recipient (30) of the shipment (10) via an identification means (40).

2. The method according to Claim 1,
**characterized in that**
the association of an identification means (40) with a storage place in a parcel compartment system (60) is made before it is determined that the shipment (10) cannot be handed over to an authorized recipient (30) at the delivery address (20).

3. The method according to Claim 1,
**characterized in that**
the association of an identification means (40) with a storage place in a parcel compartment system (60) is made after it is determined that the shipment (10) cannot be handed over to an authorized recipient (30) at the delivery address (20).

4. The method according to one or more of the preceding Claims 1 to 3,
**characterized in that**,
when a recipient (30) is associated with a storage place in a parcel compartment system (60) by an identification means (40), a compartment is reserved in a parcel compartment system (60), whereby the reservation is made via a mobile device.

5. The method according to one or more of the preceding Claims 1 to 4,
**characterized in that**,
when the shipment (10) is deposited in the parcel compartment system (60) and/or when the shipment (10) is picked up from the parcel compartment system (60), data about each procedure is transmitted to a central data management unit (70).

6. The method according to one or more of the preceding Claims 1 and 2,
**characterized in that**,
when the shipment (10) is deposited in a parcel compartment system (60), a monetary sum is recorded, and **in that** the payment of this monetary sum is a prerequisite for the release of the shipment (10) when someone picks up the shipment.

7. The method according to one or more of the preceding Claims 1 to 6,
**characterized in that**,
when the shipment (10) is deposited, data about the recipient is recorded and when someone picks up the shipment (10), data about the person picking up the shipment is recorded, and **in that** the correspondence of this data is a prerequisite for the release of the shipment (10) when a person picks up the shipment, whereby if the data about the recipient and the data about the person picking up the shipment do not match, then a function is activated by means of which the person picking up the shipment can indicate that he is the substitute recipient, which is a prerequisite for the release of the shipment (10).

8. The method according to one or more of the preceding Claims 1 to 7,
**characterized in that**,
the signature of the person picking up the shipment (10) is recorded when said person picks up the shipment.

9. The method according to Claim 8,
**characterized in that**
the signature is recorded by a means that has been provided with the signature, this means being the notification means (50).

10. The method according to Claim 8,
**characterized in that**
the signature is recorded by a means that has been provided with the signature, this means being a personal identity card.

11. An arrangement for carrying out a method for delivering a shipment (10) to one of several electronic parcel compartment systems (60) according to one or more of Claims 1 to 10, whereby the arrangement comprises at least one central data management unit (70) and several electronic parcel compartment systems (60) that each have means for exchanging data, and whereby the parcel compartment system (60) has at least means for recording, storing and comparing identification means (40), and the arrangement comprises means (80) for generating an identification means (40), whereby the identification means (40) serves to associate a recipient (30) of a shipment (10) with a storage place in a parcel compartment system (60), and the arrangement further comprises means for generating a notification means (50), whereby the notification means (50) can be provided with data for identifying a parcel compartment system (60), with data about the recipient (30) and with the identification means (40)
**characterized in that**
the arrangement comprises a mobile device (90) for generating information about free compartments in a parcel compartment system (60), whereby the mobile device (90) can be connected to the central data management unit (70) and the information serves to associate a recipient (30) of a shipment (10) with a storage place.

12. The arrangement according to Claim 11,
**characterized in that**
the identification means (40) consists of a barcode, a numerical code and/or a letter code.

13. The arrangement according to one or both of Claims 11 and 12,
**characterized in that**
the notification means (50) is provided with two identical identification means (40), whereby at least one identification means (40) can be detached from the notification means (50).

## Revendications

1. Procédé pour livrer un envoi (10) à l'un de plusieurs systèmes électroniques à compartiments pour paquets (60), dans lequel l'envoi est transporté vers une adresse de livraison (20) à laquelle un moyen de notification (50) est déposé s'il est constaté qu'aucune remise de l'envoi (10) à un destinataire autorisé (30) n'est possible, le moyen de notification (50) étant pourvu au moins de données pour repérer le système à compartiments pour paquets (60), de données du destinataire (30) et d'un moyen d'identification (40) et un dépôt de l'envoi (10) ayant lieu dans un compartiment d'un système électronique à compartiments pour paquets (60), au moins le moyen d'identification (40) associé au destinataire (30) de l'envoi (10) étant saisi et stocké pour le compartiment concerné, et, en outre, un retrait de l'envoi (10) au système à compartiments pour paquets (10) étant effectué par une personne venue pour le retirer,
- au moins le moyen d'identification (40) associé au destinataire (30) de l'envoi (10) étant saisi,
- une comparaison entre le moyen d'identification (40) associé au destinataire (30) de l'envoi (10) et les moyens d'identification stockés pour des compartiments occupés ayant lieu et
- la délivrance de l'envoi déposé (10) hors d'un compartiment ayant lieu s'il ressort du résultat de la comparaison que le moyen d'identification (40) associé au destinataire et un moyen d'identification stocké pour le compartiment concerné coïncident,
**caractérisé**
**par** les étapes suivantes avant le dépôt du moyen de notification (50):
- relier une unité centrale de gestion de données (70) à au moins un système électronique à compartiments pour paquets (60) pour transmettre des informations sur des compartiments libres du système à compartiments pour paquets (60) à l'unité de gestion de données (70) et transmettre l'information sur des compartiments libres à un dispositif mobile (90) pour générer des informations sur des compartiments libres d'un système à compartiments pour paquets (60) et
- évaluer les informations du dispositif mobile (90) sur des compartiments libres d'un système à compartiments pour paquets (60) et affecter une place de chargement d'un système à compartiments pour paquets (60) à un destinataire (30) de l'envoi (10) par un moyen d'identification (40).

2. Procédé selon la revendication 1, **caractérisé en ce que** l'affectation d'un moyen d'identification (40) à une place de chargement d'un système à compartiments pour paquets (60) a lieu avant qu'il ne soit constaté qu'aucune remise de l'envoi (10) à un destinataire autorisé (30) n'est possible à l'adresse de livraison (20).

3. Procédé selon la revendication 1, **caractérisé en ce que** l'affectation d'un moyen d'identification (40) à une place de chargement d'un système à compartiments pour paquets (60) a lieu après qu'il a été constaté qu'aucune remise de l'envoi (10) à un destinataire autorisé (30) n'est possible à l'adresse de livraison (20).

4. Procédé selon l'une ou plusieurs des revendications précédentes 1 à 3, **caractérisé en ce qu'**a lieu, par l'affectation d'un destinataire (30) à une place de chargement d'un système à compartiments pour paquets (60) par un moyen d'identification (40), la réservation d'un compartiment d'un système à compartiments pour paquets (60), la réservation se faisant par l'intermédiaire de l'appareil mobile (90).

5. Procédé selon l'une ou plusieurs des revendications précédentes 1 à 4, **caractérisé en ce que**, au dépôt de l'envoi (10) dans le système à compartiments pour paquets (60) et/ou au retrait de l'envoi (10) hors du système à compartiments pour paquets (60), des données sur l'opération respective sont transmises à l'unité centrale de gestion de données (70).

6. Procédé selon l'une ou plusieurs des revendications précédentes 1 et 2, **caractérisé en ce que**, au dépôt de l'envoi (10) dans un système à compartiments pour paquets (60), une somme d'argent est saisie et **en ce que** l'acquittement de cette somme d'argent est une condition pour la délivrance de l'envoi (10) au retrait de l'envoi par une personne venue pour le retirer.

7. Procédé selon l'une ou plusieurs des revendications précédentes 1 à 6, **caractérisé en ce que**, au dépôt de l'envoi (10), des données du destinataire sont saisies et, au retrait de l'envoi (10) par une personne venue pour le retirer, des données de la personne venue pour le retirer sont saisies et **en ce que** la coïncidence de ces données est une condition pour la délivrance de l'envoi (10) au retrait de l'envoi par une personne venue pour le retirer, une fonction étant activée, dans le cas de la non-coïncidence des données du destinataire et des données de la personne venue pour retirer l'envoi, par l'intermédiaire de laquelle la personne venue pour retirer l'envoi peut se désigner comme étant le destinataire de remplacement, ceci étant une condition pour la délivrance de l'envoi (10).

8. Procédé selon l'une ou plusieurs des revendications précédentes 1 à 7, **caractérisé en ce que**, au retrait de l'envoi (10) par une personne venue pour le retirer, la signature de la personne venue pour retirer l'envoi est saisie.

9. Procédé selon la revendication 8, **caractérisé en ce que** la signature est saisie par un moyen pourvu de la signature, lequel est le moyen de notification (50).

10. Procédé selon la revendication 8, **caractérisé en ce que** la signature est saisie par un moyen pourvu de la signature, lequel est une carte d'identité.

11. Agencement permettant d'exécuter un procédé pour livrer un envoi (10) à l'un de plusieurs systèmes électroniques à compartiments pour paquets (60) selon l'une ou plusieurs des revendications 1 à 10, l'agencement comprenant au moins une unité centrale de gestion de données (70) et plusieurs systèmes électroniques à compartiments pour paquets (60), lesquels comportent chacun des moyens permettant un échange de données, et les systèmes à compartiments pour paquets (60) comportant au moins des moyens pour saisir, stocker et comparer des moyens d'identification (40), et l'agencement comportant des moyens (80) pour générer un moyen d'identification (40), le moyen d'identification (40) servant à affecter un destinataire (30) d'un envoi (10) à une place de chargement d'un système à compartiments pour paquets (60) de l'agencement et l'agencement comportant en outre des moyens pour générer un moyen de notification (50), le moyen de notification (50) pouvant être pourvu de données pour repérer un système à compartiments pour paquets (60), de données du destinataire (30) et du moyen d'identification (40),
**caractérisé en ce que**
l'agencement comporte un dispositif mobile (90) pour générer des informations sur des compartiments libres d'un système à compartiments pour paquets (60), le dispositif mobile (90) pouvant être relié à l'unité centrale de gestion de données (70) et les informations servant à l'affectation d'un destinataire (30) d'un envoi (10) à une place de chargement.

12. Agencement selon la revendication 11, **caractérisé en ce que** le moyen d'identification (40) se compose d'un code-barres, d'un code de chiffres et/ou d'un code de lettres.

13. Agencement selon l'une des ou les deux revendications 11 et 12, **caractérisé en ce que** le moyen de notification (50) est pourvu de deux moyens d'identification identiques (40), au moins un moyen d'identification (40) étant séparable du moyen de notification (50).
